# EUROPEAN PATENT APPLICATION

(11) **EP 3 778 401 A1**
(43) Date of publication of application: **17.02.2021**
(21) Application number: 20191337.3
(22) Date of filing: 17.08.2020
(51) Int. Cl.: B64D 27/02, B64D 27/24, B64D 31/04, B64D 31/06

(54) **TAXIING AN AIRCRAFT HAVING A HYBRID PROPULSION SYSTEM**

(30) Priority: 15.08.2019 US 201962887403 P
(71) Applicant: Hamilton Sundstrand Corporation, Charlotte, NC 28217-4578 (US)
(72) Inventor: SPIERLING, Todd A., Rockford, IL 61109 (US)
(74) Representative: Dehns

(57) **Abstract**

A method of taxiing an aircraft on the ground including providing throttle power to a first air mover using an electric motor of a hybrid-electric powerplant while the aircraft is on the ground and mobilizing the aircraft using only power from the electric motor.

## Description

### BACKGROUND

### 1. Field of the Disclosure

The subject disclosure is directed to a method of use of an aircraft propulsion system having parallel hybrid powerplants, and more particularly, to taxiing of a commercial passenger aircraft having a hybrid propulsion system that includes a combustion engine and an electric motor for driving the air mover.

### 2. Description of Related Art

The level of air traffic continues to increase worldwide, leading to increased fuel consumption and air pollution. Consequently, efforts are underway to make aircraft more environmentally compatible through the use of specific types of fuel and/or by reducing fuel consumption through the use of more efficient drive systems.

For example, aircraft having mixed drive systems that include a combination of various types of engines are known for reducing pollutants and increasing efficiency. Some current combinations include reciprocating engines and jet engines, reciprocating engines and rocket engines, jet engines and rocket engines, or turbojet engines and ramjet engines.

Further, commercial aircraft traditionally have taxied in or out using one of more of the main propulsion gas turbine engines for locomotion, resulting in heavy fuel consumption, CO₂ emissions, and excessive noise near the airport. A variety of methods have been implemented as substitute "greener" alternatives, such as diesel or electric ground tugs. These options still result in heavy CO₂ emissions, require additional personnel, while aircraft movement is hostage to availability of a ground personnel.

Wheel driven electric motors require added wheel drive equipment with resulting weight and cost increase, while still requiring APU operation which results in fuel burn, noise and CO₂ emissions.

While these mixed drive systems are useful, they are not readily adaptable for use on commercial passenger aircraft. However, hybrid-electric propulsion systems that provide power through a combustion engine and an electric motor are indeed adaptable for use with commercial passenger aircraft and can provide efficiency benefits including reduced fuel consumption. The subject disclosure is directed to an aircraft having such a propulsion system, and specifically to method of using the aircraft on the ground during taxiing.

### SUMMARY OF THE DISCLOSURE

The subject disclosure is directed to a new and useful a method of taxiing an aircraft on the ground by providing throttle power to a first air mover using an electric motor of a first hybrid-electric powerplant while the aircraft is on the ground and mobilizing the aircraft using only power from the electric motor. The electric motor can operate at or below 15% of full power without stalling. The method can include engaging a heat engine of the hybrid-electric powerplant for takeoff after taxiing. The method can include providing power to a second air mover using an electric motor of a second hybrid-electric powerplant while the aircraft is on the ground and turning the aircraft wherein power provided to the first air mover is greater than power provided to the second air mover.

The method can include using only power from the electric motor and not from a heat engine of the hybrid-electric powerplant, disengaging a heat engine of the hybrid-electric powerplant after landing the aircraft, and engaging the heat engine prior to takeoff A throttle increase can be coupled with a power increase in only the electric motor when the aircraft is on the ground and in taxiing mode.

The aircraft taxiing system can include dual powerplants with a first hybrid-electric powerplant associated with a first wing of the aircraft configured to deliver power to a first air mover for propelling the aircraft when on the ground a second hybrid-electric powerplant associated with a second wing of the aircraft configured to deliver power to a second air mover for propelling the aircraft when on the ground, wherein each hybrid-electric powerplant includes a respective heat engine and a respective electric motor, and a motor controller configured to control the electric motor of first hybrid electric powerplant and the electric motor of second hybrid-electric powerplant in order to selectively provide throttle input to the respective heat engines and the respective electric motors the first hybrid electric powerplant and the second hybrid electric powerplant based on a location of the aircraft. The motor controller is also connected to control the heat motors. The heat engine and the electric motor of each of the hybrid-electric powerplants can be arranged in a parallel drive configuration or in an in-line drive configuration. Power delivery from each of the hybrid-electric powerplants can be about evenly split or proportionally split between the heat engine and the electric motor.

These and other features of the aircraft propulsion system of the subject disclosure will become more readily apparent to those having ordinary skill in the art to which the subject disclosure appertains from the detailed description of the preferred embodiments taken in conjunction with the following brief description of the drawings.

### BRIEF DESCRIPTION OF THE DRAWINGS

So that those having ordinary skill in the art will readily understand how to make and use the subject disclosure without undue experimentation, preferred embodiments thereof will be described in detail herein below with reference to the figures wherein:
Fig. 1 is a top plan view of a commercial passenger aircraft having a propulsion system configured in accordance with a preferred embodiment of the subject disclosure, which includes a hybrid-electric powerplant associated with the left wing of the aircraft and a hybrid-electric powerplant associated with the right wing of the aircraft;
Fig. 2 is a front elevational view of the aircraft illustrated in Fig. 1;
Fig. 3 is a left side front elevational view of the aircraft illustrated in Fig. 1;
Fig. 4 is a schematic representation of the propulsion system of the subject disclosure, which includes a pair of hybrid-electric powerplants each having an electric motor (eM) and a heat engine or motor (hM); and
Fig. 5 is a flight plant of the aircraft of Fig. 1, showing various stages of flight of the aircraft.

### DETAILED DESCRIPTION OF THE PREFERRED EMBODIMENTS

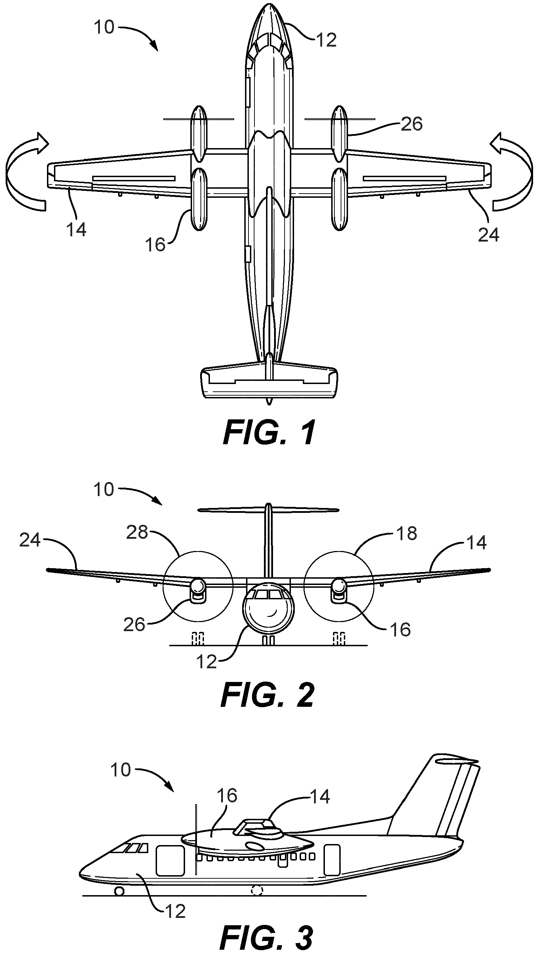

Referring now to the drawings wherein like reference numeral identify similar structure or features of the subject disclosure, there is illustrated in Figs. 1 through 5, a commercial passenger aircraft 10 having a t system that is configured to taxi the aircraft when the aircraft is on the ground in accordance with a preferred embodiment of the subject disclosure.

Figs. 1-3 show the aircraft 10 including a fuselage 12 designed to carry passengers, a left wing 14 and a right wing 24. The left wing 14 supports a first engine nacelle 16 for housing a hybrid-electric powerplant that delivers power to a first air mover or a propeller 18 to propel the aircraft 10 while on the ground. The right wing 24 supports a second engine nacelle 26 for housing a hybrid-electric powerplant that delivers power to a second air mover or a propeller 28 to propel the aircraft 10 while on the ground.

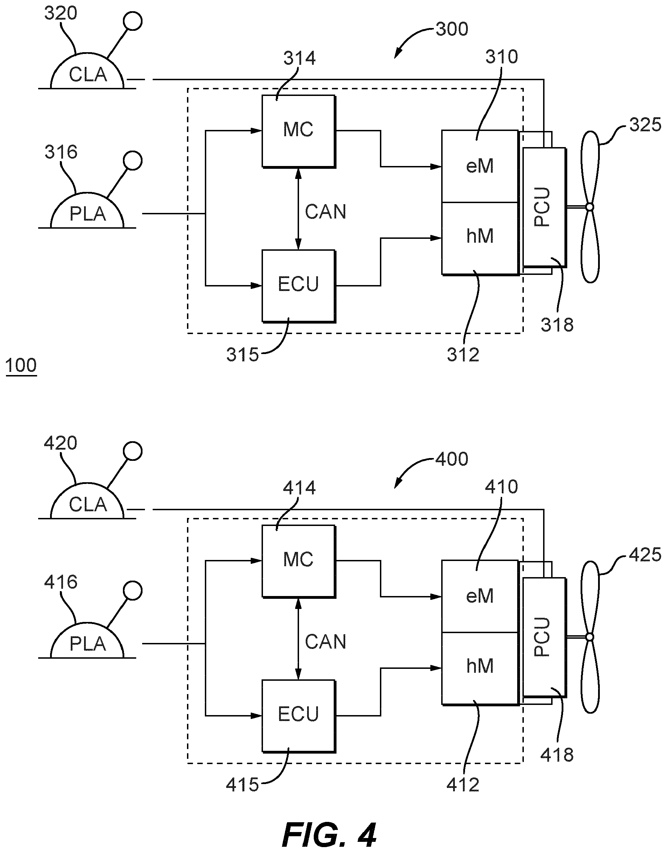

Fig. 4 illustrates the propulsion system of the subject disclosure, which is designated generally by reference numeral 100. The propulsion system 100 includes two hybrid-electric powerplants 300 and 400. Each hybrid-electric powerplant 300, 400 of propulsion system 100 has two power lanes that deliver power to an air mover or propeller 325, 425. One power lane includes an electric motor (eM) 310, 410 and the other power lane includes a heat engine (hM) 312, 412. The electric motor 310, 410 and the heat engine 312, 412 of the hybrid-electric powerplant 300, 400 can be arranged in a side-by side configuration or an in-line drive configuration, depending upon the application. During typical operation power can be evenly split between the electric motor 310, 410 and the heat engine 312, 412 (i.e., a split of 50% electric motor power and 50% heat engine power), or power can be divided proportionally between the electric motor 310, 410 and the heat engine 312, 412 (e.g., any split from 10% electric motor power to 90% heat engine power or vice versa).

The hybrid-electric powerplant 300 further includes a Motor Controller (MC) 314 and an Engine Control Unit (ECU) 315 which communicate with one another by way of communication Bus, such as a CAN Bus or similar communication network. The hybrid electric powerplant 300 receives control input from the pilot by way of a Power Lever Angle (PLA) throttle 316 located on the flight deck of the aircraft 10. The hybrid-electric powerplant 300 further includes a Propeller Control Unit (PCU) 318 that receives input from the pilot by way of a Condition Lever Angle (CLA) throttle 320 located on the flight deck of the aircraft 10.

It is envisioned that the electric motor 310, 410 would be designed to output up to 1 MW or more of shaft power to propeller 325, 425 with any output speed for the best combination of power density, heat management and efficiency. The electric motor 310, 410 could include distributed winding or concentrated windings.

It is also envisioned that a battery system would provide energy to the electric motor 312 of the hybrid-electric powerplant 300. The battery system could be located within the fuselage 12 of the aircraft 10 and/or within the wings 14, 24 of the aircraft 10, or in any other optimum location for space availability and proximity of use.

It is further envisioned that the heat engine 312 of the hybrid-electric powerplant 300 could be a heat engine of any type, e.g., a gas turbine, spark ignited, diesel, rotary or reciprocating engine of any fuel type with a configuration of turbomachinery elements, selected from a group consisting of a turbocharger, turbo-supercharger, or supercharger and exhaust recovery turbo compounding, which is mechanically, electrically, hydraulically or pneumatically driven. An example of a rotary engine suitable for this application is disclosed in U.S. Patent No. 10,145,291.

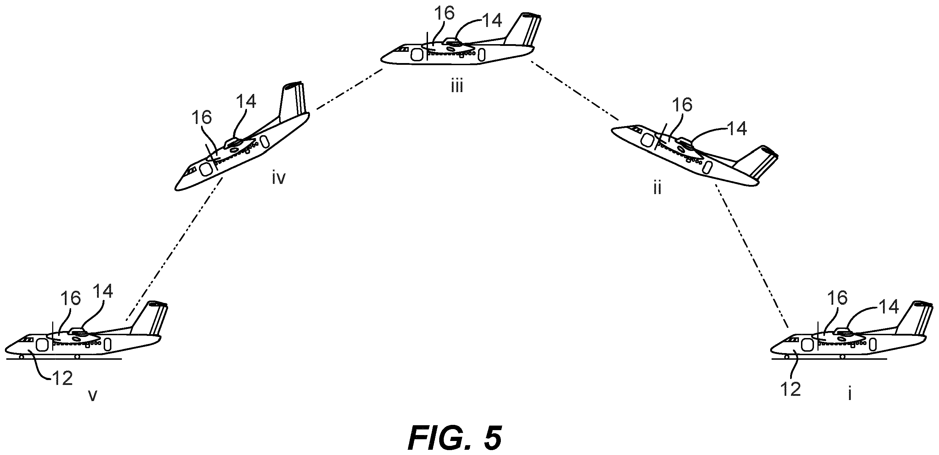

Fig. 5 shows a method of taxiing the aircraft includes providing power to the first air mover 325 using only the electric motor 310 of the first hybrid-electric powerplant 300 while the aircraft 10 is on the ground and mobilizing the aircraft 10 using only power from the electric motor 310, without having to use breaks or other means of slowing the aircraft or otherwise counteracting the thrust provided by the first air mover 325, as shown in positions *i* and *v*. The electric motor 310 is able to operate at or below 15% of full power without stalling during taxiing. It is also considered that the second air mover 425 also uses electric motor 410 of the second hybrid-electric powerplant 400 while the aircraft is on the ground and turns the aircraft when power provided to the first air mover 325 is greater than power provided to the second air mover 425.

A throttle increase from the pilot is coupled with a power increase in only the electric motor 310 when the aircraft is on the ground. The heat engines 312, 412 of the hybrid-electric powerplants 300, 400 are engaged only for takeoff after taxiing is complete and disengaged after landing, as shown in positions *ii-iv* of Fig. 5. The motor controller 314, 414 is configured such that if the throttle is increased, the controller 314, 414 being aware of the aircraft's position on the ground and that the aircraft is taxiing increases power only to the electric motor 310.

The arrangement and method described above reduces the noise and emissions (CO₂) near the airport, provides increased maneuverability on the ground, while not requiring any additional equipment to be added to the aircraft, and reducing weight and fuel burn. The aircraft no longer have to rely on airport ground handling equipment.

While the systems and methods of the subject disclosure has been described with reference to preferred embodiments, those skilled in the art will readily appreciate that changes and/or modifications may be made thereto without departing from the scope of the invention as defined by the claims.

## Claims

1. A method of taxiing an aircraft on the ground comprising:
providing power to a first air mover (325) using an electric motor (310) of a hybrid-electric powerplant (300) while the aircraft is on the ground; and
mobilizing the aircraft using only power from the electric motor.

2. The method of claim 1, wherein the electric motor operates at or below 15% of full power.

3. The method of claim 1 or 2, further comprising engaging a heat engine (312) of the hybrid-electric powerplant for takeoff after taxiing.

4. The method of any preceding claim, wherein the hybrid-electric powerplant is a first hybrid-electric powerplant and further comprising providing power to a second air mover (425) using an electric motor of a second hybrid-electric powerplant (400) while the aircraft is on the ground.

5. The method of claim 4, further comprising turning the aircraft by providing thrust from the first air mover, wherein power provided to the first air mover is greater than power provided to the second air mover.

6. The method of any preceding claim, wherein mobilizing the aircraft includes using only power from the electric motor (310) and not from a heat engine (312) of the hybrid-electric powerplant.

7. The method of claim 6, further comprising disengaging a heat engine of the hybrid-electric powerplant after landing the aircraft.

8. The method of any preceding claim, wherein a throttle increase is only coupled with a power increase in the electric motor when the aircraft is on the ground.

9. An aircraft taxiing system with dual powerplants, comprising:
a first hybrid-electric powerplant (300) associated with a first wing (14) of the aircraft (10) configured to deliver power to a first air mover (325) for taxiing the aircraft when on the ground;
a second hybrid-electric powerplant (400) associated with a second wing (24) of the aircraft configured to deliver power to a second air mover (425) for propelling the aircraft when on the ground, wherein each hybrid-electric powerplant includes a respective heat engine (312, 412) and a respective electric motor (310, 410), wherein each respective heat engine is configured to be disengaged during taxiing; and
a motor controller (314, 414) configured to control the electric motor of first hybrid electric powerplant and the electric motor of second hybrid-electric powerplant in order to selectively provide throttle input to the respective heat engines and the respective electric motors based on a location of the aircraft.

10. The aircraft taxiing system recited in claim 9, wherein the heat engine and the electric motor of each of the hybrid-electric powerplants are arranged in a parallel drive configuration.

11. The aircraft taxiing system as recited in claim 9, wherein the heat engine and the electric motor of each of the hybrid-electric powerplants are arranged in an in-line drive configuration.

12. The aircraft taxiing system as recited in claim 9, 10 or 11, wherein power delivery from each of the hybrid-electric powerplants is configured to be about evenly split between the heat engine and the electric motor.

13. The aircraft taxiing system as recited in claim 9, 10 or 11, wherein power delivery from each of the hybrid-electric powerplants is configured to be proportionally split between the heat engine and the electric motor.

14. The aircraft taxiing system as recited in any of claims 9 to 13, wherein the motor controller is configured to engage and disengage each respective heat engine.

15. The aircraft taxiing system as recited in claim 14, wherein the motor controller is configured to disengage the heat engine after landing.
